# EUROPÄISCHE PATENTANMELDUNG

(11) **EP 2 741 105 A2**
(43) Veröffentlichungstag der Anmeldung: **11.06.2014**
(21) Anmeldenummer: 13193168.5
(22) Anmeldetag: 15.11.2013
(51) Int. Cl.: G01S 13/93

(54) **Karosserieteil**

(30) Priorität: 07.12.2012 DE 102012222557; 14.01.2013 DE 102013200364
(71) Anmelder: Decoma (Germany) GmbH, 66280 Sulzbach / Saar (DE)
(72) Erfinder: Swoboda, Torsten, 72622 Nürtingen (DE); Götzelmann, Johannes, 97237 Altertheim (DE); Sailer, Gottfried, D-73614 Schorndorf (DE)
(74) Vertreter: Rausch, Gabriele

(57) **Zusammenfassung**

Beschrieben wird ein Karosserieteil für ein Kraftfahrzeug vor, insbesondere in Form eines Stoßfängers oder einer Stoßleiste, wobei das Karosserieteil (SF) aus einem Kunststoff gefertigt ist und auf seiner Rückseite eine Fläche für einen rückseitig anbringbaren Sensor, vorzugsweise einen Radarsensor aufweist, wobei dieser Fläche eine Heizeinrichtung in Form einer elektrisch leitfähigen Schicht (HZ) zugeordnet ist.

## Beschreibung

Die Erfindung betrifft ein Karosserieteil für ein Kraftfahrzeug nach der Art von Anspruch 1.

Bei Kraftfahrzeugen werden in Karosserieteilen Sensoren verbaut, welche bspw. der Abstandsmessung dienen. Solche Sensoren können in einem Stoßfänger der Vorder- und/oder der Rückseite eingebaut sein und während des Einparkens den Abstand zu einem Hindernis, einem weiteren Fahrzeug erfassen. Derartige Systeme sind als PDC Sensoren bekannt.

Bekannte Sensoren dieser Art sind in Durchbrüchen von Stoßfängern eingelassen und mit einer der Farbe des Fahrzeuges, des Stoßfängers lackiert. Ein Beispiel für einen in einem Karosserieteil, einer Stoßleiste oder einem Stoßfänger eingelassenen PDC Sensor zeigt die DE 103 14 862 A1.

Bei mit Radarwellen arbeitenden Sensoren sind Vorkehrungen zur Vermeidung von Vereisung im Winter zu treffen. Es muss sichergestellt sein, dass sich keine Eisschicht vor dem Abstrahlbereich des Sensors bilden kann, da sonst die Funktion des Sensors nicht mehr gegeben ist. Dazu ist es bekannt, die Sensorfläche mit einer Heizeinrichtung zu versehen. Die DE 10 2011 107 216 A1 beschreibt ein Radom einer Sende- und Empfangseinrichtung für Radarwellen in einem Kraftfahrzeug. Eine Heizeinrichtung ist flächig zwischen einer Tragschicht und einer Deckschicht angeordnet. Insbesondere ist die Heizeinrichtung als ein elektrisch leitender Anstrich ausgebildet.

Die vorbekannte Lösung versieht das sende- und empfangsaktive Ende des Sensors mit einer Heizeinrichtung. Der Sensor ist in einer Öffnung des Karosserieteils, des Stoßfängers aufgenommen und somit von außen sichtbar.

Nachteilig bei einer derartigen Lösung ist die Sichtbarkeit der Sensoren, auch wenn deren sichtbare Oberfläche in Farbe der Stoßleiste lackiert ist.

Die Aufgabe der vorliegenden Erfindung besteht darin, ein Karosserieteil für eine Sensoraufnahme in gegenüber den bekannten Ausführungen verbesserter Ausführung zu schaffen.

Diese Aufgabe wird gelöst durch die Merkmale von Anspruch 1. Weiterbildungen ergeben sich aus den Unteransprüchen.

Die Erfindung schlägt ein Karosserieteil für ein Kraftfahrzeug vor, insbesondere in Form eines Stoßfängers oder einer Stoßleiste, wobei das Karosserieteil aus einem Kunststoff gefertigt ist und auf seiner Rückseite eine Fläche für einen rückseitig anbringbaren Sensor, vorzugsweise einen Radarsensor aufweist, wobei dieser Fläche eine Heizeinrichtung in Form einer elektrisch leitfähigen Schicht zugeordnet ist.

Der zu beheizende Bereich in einem Kunststoffbauteil wird mit zwei gegenüberliegenden Elektroden und einem zwischen den Elektroden liegenden Widerstandsheizelement realisiert (Flächenheizelement). Das Widerstandsheizelement, die Heizschicht besteht aus einer viskosen (gieß-, druck-, streichbar) reaktiven Flüssigkeit, welche thermisch oder mit UV Einwirkung in kurzer Zeit aushärtet. Die erfindungsgemäß realisierte Heizeinrichtung - der flächige Auftrag, die flächig gestaltete Schicht, welche in der Schichtdicke und über die Fläche von Strom durchflossen wird - hat gegenüber einer auf einer Folie oder direkt applizierten Heizdrahtgestaltung den Vorteil einer wesentlich unempfindlicheren Gestaltung und gleichzeitig sehr flächigen Heizwirkung. Die leitfähige Schicht der erfindungsgemäßen Heizeinrichtung kann als eine durchgehende Fläche, aber auch in schmalen, zueinander isolierten Streifen aufgebracht sein.

Bevorzugt ist die elektrisch leitfähige Schicht als ein leitfähige Partikel aufweisender, aus solchen Partikeln bestehender Lack, eine viskose Paste gebildet. Der Widerstandswert der Schicht kann durch Beimischungen von Kohlenstoff in Form von Nano-Tubes gezielt bestimmt, eingestellt werden. Die Schicht wird vorzugsweise aufgestrichen oder mittels Siebdruck appliziert.

Eine bevorzugte Weiterbildung der Erfindung sieht eine Schutzschicht oberhalb der Heizschicht, diese also vollständig bedeckend, vor. Dadurch werden die Heizschicht schädigende Einflüsse, insbesondere durch Salz, vermieden.

Die Beschichtung kann direkt auf dem Kunststoffbauteil, der Rückseite des Kunststoffstoßfängers aufgebracht werden.

Des Weiteren kann die Beschichtung, die Heizschicht auch auf eine Folie oder zwischen zwei Folien aufgetragen werden. Die Folie(n) wirken dann als Versiegelungsschicht.

Die Bestromung der Heizschicht erfolgt über zwei linear ausgebildete Elektroden, welche die Fläche der Heizschicht sich gegenüberliegend umrahmen. Der Anschluss der Elektrodendrähte erfolgt über ein Stecksystem, welches in Form von Steckkontakten gestaltet ist und einem automobilen Standard entspricht. Ein separates elektronisches Bauteil besorgt die Steuerung der Stromstärke, insbesondere in Abhängigkeit des Fahrzustandes und/oder der Temperatur.

Die Kontaktierung der Elektroden kann über einen auf der Rückseite des zu beheizenden Bauteils befestigten Rahmen mit integrierten / eingegossenen Stecker realisiert werden. Auch kann die Kontaktierung durch Vercrimpen oder Verprägen der Elektrode mit elektrischen Leitungen erfolgen. Alternativ kann die Kontaktierung zwischen Rahmen und Elektroden durch im Rahmen integrierte, leitfähige Zähne realisiert werden, welche sich durch Anpressen des Rahmens auf die Elektroden in die Elektrodenbahn hineindrücken.

Die Steckverbindungssysteme - die Steckerstifte z.B. - können direkt in oder auf dem aufzuheizenden Bauteil, den Elektroden bzw. der Heizschicht angebracht sein. Auch ist es möglich die Steckerstifte, die Kontaktierelemente an einem Rahmen zu fixieren, der eine Verbindung mit dem Karosseriebauelement aufweist.

Vorzugsweise ist die Schicht der Heizeinrichtung in einer Vertiefung des Kunststoffbauteils eingelassen. Die Schichtdicke des Bauteils ist hierbei derartig reduziert, dass sich die gewünschte Strahlungscharakteristik ergibt, die erforderliche Sende- und Empfangsstrahlungsstärke erzielt wird, die erforderliche Abtaugeschwindigkeit erreicht wird. Auch die Schichtdicke der Heizschicht ist derartig gewählt, dass sich einerseits die erforderliche Heizleistung ergibt, andererseits keine Einschränkung der Sensorfunktion erfolgt.

Die elektrisch leitfähige Schicht der Heizeinrichtung kann auch dadurch realisiert sein, indem der Kunststoff im vorgesehenen Bereich durch Hinzufügung von leitfähigen Partikeln, bspw. Kohlenstoff Nano-Tubes, elektrisch leitfähig gemacht wird.

Eine Weiterbildung der Erfindung sieht vor, dass die Rückseite des Karosserieteils in genau dem Flächenbereich ausgedünnt ist, welcher der Kopffläche des Sensors entspricht.

Eine Ausbildung der Erfindung sieht vor, dass der Sensor mittels einer Halterung rückseitig an dem Karosserieteil, dem Stoßfänger angebracht wird.

Das Karosserieteil, der Stoßfänger kann rückseitig Rastelemente bzw. Befestigungselemente aufweisen, über welche der Sensor nebst einer ihn aufnehmenden Halterung anbringbar ist.

Des Weiteren erfolgt die Erläuterung eines Ausführungsbeispiels der Erfindung an Hand der Zeichnungen.

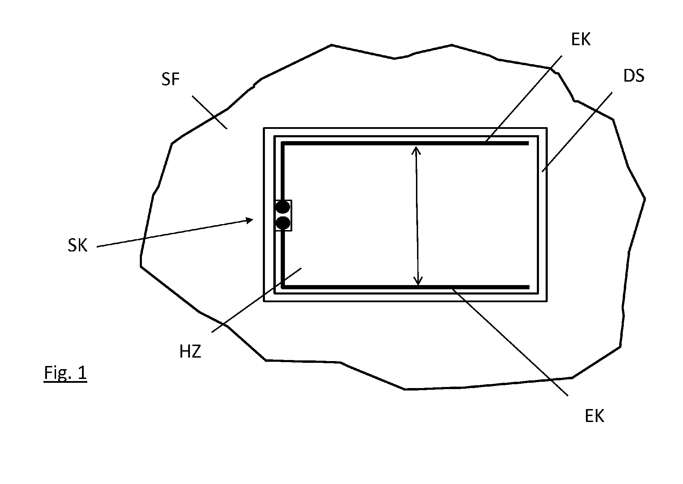

Die Figur 1 zeigt in Draufsicht einen Teil der Rückseite eines Kunststoffstoßfängers SF. In einem vorgesehenen Flächenbereich ist die Rückseite des Stoßfängers SF mit einer elektrisch leitfähigen Schicht HZ bedeckt. Die elektrisch leitfähige Schicht HZ ist mit zwei rahmenförmigen Elektroden EK versehen, über welche die Heizschicht mit einer Spannung beaufschlagt wird. Die Elektroden EK sind bspw. als dünne metallische Bahnen, Leiterbahnen ausgebildet, welche auf die Heizschicht HZ aufgelegt bzw. in die Schicht HZ eingelassen sind und mit dieser in guten elektrischen Kontakt stehen. Die sich gegenüberliegenden Stränge der Elektroden EK ergeben einen die Fläche des Heizschicht HZ gleichmäßig durchdringenden Stromfluss, welcher mit dem Doppelpfeil angedeutet ist.

Die Spannungsbeaufschlagung der Elektroden EK erfolgt über ein als Stecksystem realisiertes Kontaktsystem SK. Beispielsweise handelt es sich um zwei Steckstifte, je einer an einer der Elektrodenbahnen EK, auf die ein entsprechendes Bucksenteil aufsteckbar ist. Das Buchsenteil steht mit einer Elektronik in Verbindung, über die die Spannungsbeaufschlagung der Heizschicht HZ erfolgt.

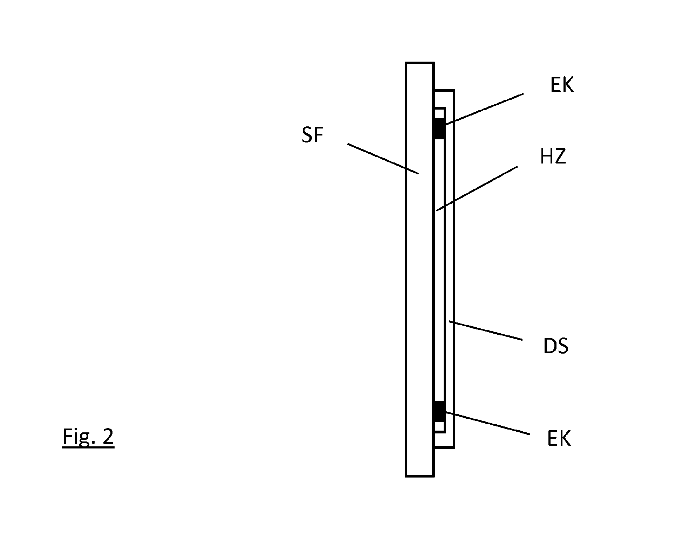

Die Heizschicht HZ ist mit einer als Schutzschicht fungierenden Deckschicht DS überzogen, welche das Material der Heizschicht HZ vor Umwelteinflüssen (Staub, Wasser, Salz) schützt. Die Figur 2 zeigt einen entsprechenden Schnitt durch den Kunststoffstoßfänger SF, die Heizschicht HZ sowie der diese bedeckenden Deckschicht DS.

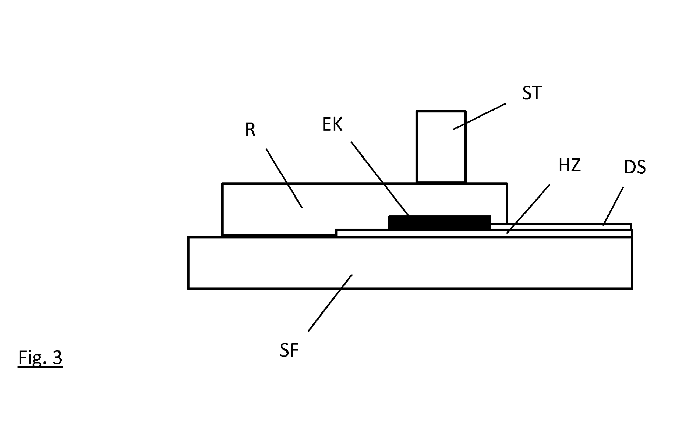

Figur 3 zeigt eine Ausführung zur Kontaktierung der Steckverbindungen der Elektroden EK mit einer nicht gezeigten Steuerungselektronik. Ein Stecker SK, dessen die Steckstifte umgebende Außenbuchse, ist auf einem Rahmenelement R angebracht. Die nicht gezeigten Steckstifte des Steckers SK kontaktieren die Elektroden EK, sind elektrisch leitend mit diesen verbunden. Der Rahmen R, das Rahmenelement übergreift die Elektroden EK und auch Teile der von der Folie DS geschützten Heizschicht HZ. Das Rahmenelement ist mit dem Karosserieteil SF verbunden, bspw. verklebt und kann neben dem Stecker SK auch den Sensor haltern bzw. Aufnahmeelemente (Rastverbindungen, Clipse) für den Sensor aufweisen.

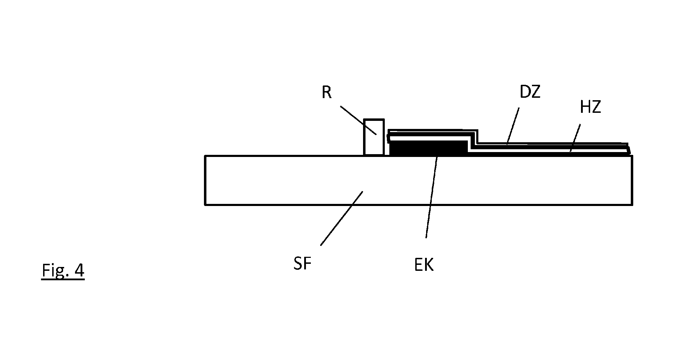

In Figur 4 ist eine weitere Kontaktierungsmöglichkeit dargestellt. Der Stecker SK, dessen Steckstifte sind direkt auf der Elektrode EK angebracht, mit diesen elektrisch verbunden. Die Elektroden EK, die entsprechenden Leiterbahnen werden im Randbereich von der Heizschicht HZ sowie der diese Heizschicht HZ schützenden Folie DS überdeckt. Die Steckstifte des Steckers SK sind im gezeigten Randbereich durch die Heiz- und die Deckschicht HZ, DS geführt - diese weisen entsprechende Öffnungen, Durchlässe auf, deren Aufbringung ist in diesem Bereich ausgespart.

Dem Rand der Heizschicht HZ ist ein die Fläche des Heizelementes wenigstens teilweise umgebendes Rahmenelement R zugeordnet, der ein seitliches Eindringen von Schmutz oder Feuchtigkeit verhindert. Das Rahmenelement R ist mit dem Karosserieteil SF verbunden, bspw. mit diesem verklebt. Auch bei dieser Ausgestaltung kann das Rahmenelement R Aufnahme-, Befestigungselemente für den Sensor aufweisen.

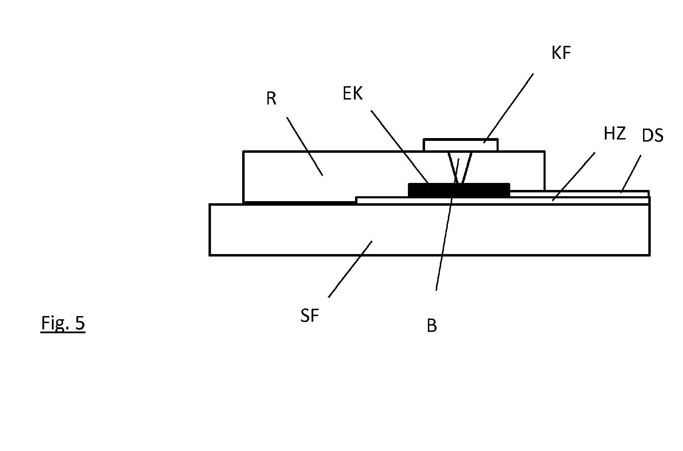

Figur 5 zeigt eine Ausgestaltung der Kontaktierung, bei der ein Vercrimpen, Verprägen einer auf der Oberseite des Rahmens R sitzenden Kontaktfläche KF mit der darunter liegenden Elektrode EK erfolgt. Der Rahmen R umgibt die Fläche der Heizschicht HZ wenigstens teilweise und überdeckt auch die auf der Heizschicht aufliegende Elektrode EK. Der mit dem Karosserieteil SF verbundene Rahmen R bildet so einen seitlichen Abschluss der Heizfläche HZ für den nicht dargestellten Sensor.

Die auf der Oberseite des Rahmens R elektrisch leitfähige Kontaktfläche KF ist in einem Bereich derartig vercrimpt, verprägt, so dass sich eine durch den Rahmenkörper hindurchgreifende Brücke B bildet, welche die Kontaktfläche KF elektrisch mit der darunter liegenden Elektrode EK verbindet.

Letztlich kann auch vorgesehen sein, dass die am Rahmen R angebrachte Kontaktfläche KF an der zum Karosserieteil weisenden Seite zahnförmige Elemente aufweist, welche beim Anbringen des Rahmens R in die Heizschicht bzw. die Elektroden greifen, eingedrückt werden und so die Kontaktierung bewirken. Die Zähne sind dann wie die in Figur 5 dargestellten Brücken B ausgebildet.

### Bezugszeichenliste

- SF: Karosserieteil, Stoßfänger, Kunststoffstoßfänger
- HZ: Heizschicht, elektrisch leitende Schicht, Heizeinrichtung
- DS: Deckschicht, Schutzschicht, Folie
- EK: Elektrode, Leiterbahn
- SK: Steckkontakt, Kontaktierung
- R: Rahmen
- KF: Kontaktfläche
- B: Brücke, leitende Verbindung

## Patentansprüche

1. Karosserieteil für ein Kraftfahrzeug vor, insbesondere in Form eines Stoßfängers oder einer Stoßleiste, wobei das Karosserieteil (SF) aus einem Kunststoff gefertigt ist und auf seiner Rückseite eine Fläche für einen rückseitig anbringbaren Sensor, vorzugsweise einen Radarsensor aufweist, wobei dieser Fläche eine Heizeinrichtung (HZ) in Form einer elektrisch leitfähigen Schicht (HZ) zugeordnet ist.

2. Karosserieteil nach Anspruch 1,
die elektrisch leitfähige Schicht (HZ) besteht aus einer elektrisch leitfähige Partikel aufweisenden, flüssig bzw. pastös verarbeitbaren Substanz, welche flächig aufgebracht wird.

3. Karosserieteil nach Anspruch 1,
die elektrisch leitfähige Schicht (HZ) besteht aus einem Kunststoff, der durch Hinzufügung von elektrisch leitfähigen Partikeln in der vorgesehenen Fläche elektrisch leitfähig gemacht wurde.

4. Karosserieteil nach einem der vorhergehenden Ansprüche,
die elektrisch leitfähige Schicht (HZ) weist Elektroden (EK) auf, über welche die Schicht (HZ) mit Spannung beaufschlagbar ist.

5. Karosserieteil nach Anspruch 4,
die Elektroden (EK) weisen ein Stecksystem (SK) zur Kontaktierung mit einer die Spannungsbeaufschlagung bewirkenden Elektronik auf.

6. Karosserieteil nach einem der vorhergehenden Ansprüche,
die elektrisch leitfähige Schicht (HZ) ist mit einer sie bedeckenden Deckschicht (DS) überzogen.

7. Karosserieteil nach einem der vorhergehenden Ansprüche,
die elektrisch leitfähige Schicht (HZ) ist direkt auf einer Fläche des Karosserieteils (SF) aufgebracht.

8. Karosserieteil nach einem der vorhergehenden Ansprüche,
die elektrisch leitfähige Schicht (HZ) ist auf einer Folie aufgebracht, welche auf eine Fläche des Karosserieteils (SF) aufbringbar ist.

9. Karosserieteil nach einem der vorhergehenden Ansprüche,
die elektrisch leitfähige Schicht (HZ) ist in einem Flächenbereich des Karosserieteils aufgebracht, der eine reduzierte Schichtdicke aufweist.

10. Karosserieteil nach Anspruch 6,
die Deckschicht (DS) ist als eine Folie ausgebildet.

11. Karosserieteil nach einem der vorhergehenden Ansprüche,
die Heizschicht (HZ) ist mit einer ihre Rückseite als Schutzschicht bedeckenden Folie (DS) versehen und weist auf ihrer vorderen, dem Karosserieteil (SF) zugewandten Seite eine Klebschicht auf.

12. Karosserieteil nach einem der vorhergehenden Ansprüche,
die Fläche der Heizschicht (HZ) ist wenigstens teilweise von einem Rahmen (R) umgeben, der innenseitig mit der Karosserieteil (F) verbunden ist.

13. Karosserieteil wenigstens nach Anspruch 12,
die elektrische Kontaktierung der Heizschicht (HZ) erfolgt über am Rahmen (R) angebrachte Elemente, vorzugsweise einen Steckverbinder (SK).

14. Karosserieteil wenigstens nach Anspruch 4 und 12,
die elektrische Kontaktierung der Elektroden (EK) der Heizeinrichtung (HZ) erfolgt durch einen am Rahmen (R) angebrachten Steckverbinder (SK).

15. Karosserieteil wenigstens nach Anspruch 12,
die elektrische Kontaktierung der Heizschicht (HZ) erfolgt über eine am Rahmen (R) angebrachte metallische Kontaktfläche (KF), welche über eine durch Verprägung, Vercrimpung gebildete Brücke (B) eine elektrische Verbindung zu der Heizeinrichtung (HZ), vorzugsweise den Elektroden (EK) der Heizeinrichtung (HZ) bildet.

16. Karosserieteil wenigstens nach Anspruch 4,
der Rahmen (R) überdeckt wenigstens in einem Randbereich die Heizschicht (HZ) und vorzugsweise auch eine die Heizschicht (HZ) schützende Deckschicht (DS).
